# EUROPÄISCHE PATENTANMELDUNG

(11) **EP 1 018 661 A2**
(43) Veröffentlichungstag der Anmeldung: **12.07.2000**
(21) Anmeldenummer: 99403102.9
(22) Anmeldetag: 09.12.1999
(51) Int. Cl.: G02B 6/44

(54) **Optische Ader mit einer Vielzahl von Lichtwellenleitern**

(30) Priorität: 07.01.1999 DE 19900213
(71) Anmelder: ALCATEL, 75008 Paris (FR)
(72) Erfinder: Nothofer, Klaus Dipl.-Ing., 40699 Erkrath (DE); Lausch, Peter Dipl.-Ing., 47803 Krefeld (DE)
(74) Vertreter: Döring, Roger, Dipl.-Ing.

(57) **Zusammenfassung**

Bei einer optischen Ader mit einer Vielzahl von Lichtwellenleitern, die in einer Hülle aus thermoplastischem Kunststoff angeordnet sind, verlaufen die Lichtwellenleiter (1) parallel zueinander oder sind mit großer Schlaglänge miteinander verseilt. Das Bündel aus Lichtwellenleitern (1) ist von einer Hülle (2) aus geschäumtem Kunststoff eng umfaßt.

## Beschreibung

Die Erfindung betrifft eine optische Ader nach dem Oberbegriff des Anspruchs 1.

In der Lichtwellenleiterkabeltechnik sind verschiedene Adertypen bekannt.

Festadern sind einzelne Lichtwellenleiter, die mit einer ersten Schicht aus einem nachgiebigen Material, z. B. Silikonkautschuk versehen sind. Auf diese erste Schicht wird eine zweite Schicht aus einem mechanisch stabilen Kunststoff, wie z. B. Polyester, Polyamid aufextrudiert. Vorteilhaft ist bei dieser Konstruktion, daß die empfindliche optische Faser sehr gut geschützt ist.

Da solche Festadern einen relativ großen Außendurchmesser (bis zu 1,0 mm) aufweisen, ist der Platzbedarf in einem Kabel sehr hoch.

Bei Hohl- oder Bündeladern sind ein oder mehrere Lichtwellenleiter lose in einer Hülle aus thermoplastischem Kunststoff untergebracht. Die Lichtwellenleiter liegen normalerweise mit einer Überlänge von einigen ‰ in der Hülle vor. Bei dieser Konstruktion können sich die Lichtwellenleiter relativ frei bewegen. Nachteilig hierbei ist, daß der Platzbedarf für solche Adern relativ groß ist. So beträgt der Außendurchmesser einer Bündelader mit 10 Lichtwellenleiter ca. 3,00 mm.

Der vorliegenden Erfindung liegt die Aufgabe zugrunde, eine optische Ader bereitzustellen, die eine verbesserte Raumaufteilung der Lichtwellenleiter aufweist, d. h. eine höhere Anzahlt an Lichtwellenleitern pro Fläche möglich macht. Darüberhinaus soll eine negative Beeinträchtigung der Lichtwellenleiter durch mechanische Kräfte von außen vermieden werden.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Der wesentliche Vorteil der Erfindung ist darin zu sehen, daß radiale Kräfte nicht mehr unmittelbar über die Aderhülle auf die innerhalb der Aderhülle befindlichen Lichtwellenleiter wirksam werden und von daher Mikrokrümmungen und damit verbundene Dämpfungserhöhungen vermieden sind. Durch die Aufschäumung der Hülle können bei einer radialen Krafteinwirkung die Lichtwellenleiter in die weiche Hülle eindringen. Durch die geschäumte Hülle wird die Querdruckempfindlichkeit durch eine breitere Lastverteilung verringert.

Ein weiterer wesentlicher Vorteil besteht darin, daß durch die Aufschäumung des thermoplastischen Kunststoffes der Hülle eine Einsparung an Kunststoff erzielt wird, die je nach Aufschäumgrad bis zu 50 %, unter Umständen auch bis zu 70 % betragen kann.

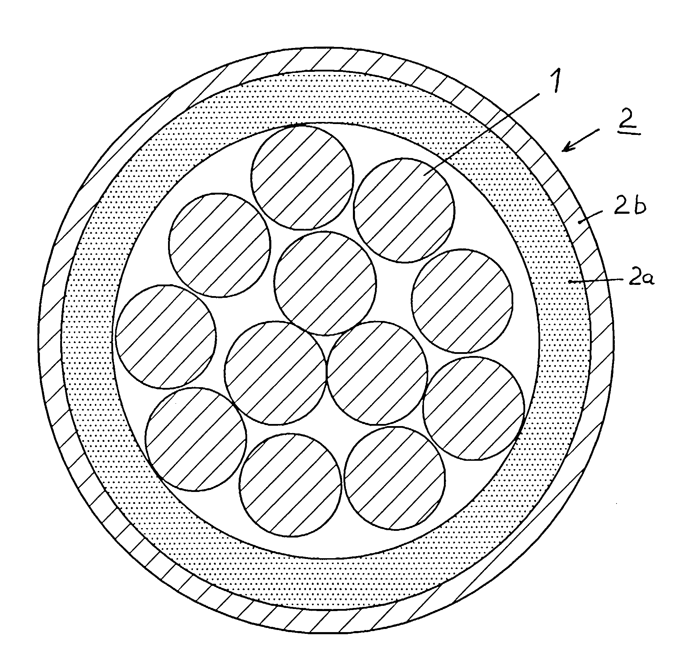

Die Erfindung ist anhand des in der Figur schematisch dargestellten Ausführungsbeispiels näher erläutert.

In der Figur ist ein Schnitt durch eine Ader nach der Lehre der Erfindung dargestellt.

Die Ader weist eine Vielzahl von Lichtwellenleitern 1 auf - in der Figur sind 12 Lichtwellenleiter 1 dargestellt -, die von einer Aderhülle 2 eng umgeben sind. Die Lichtwellenleiter 1 verlaufen parallel zueinander, d. h. unverseilt innerhalb der Hülle 2 oder sind mit einer relativ großen Schlaglänge miteinander verseilt. Die Zwischenräume zwischen den Lichtwellenleitern 1 untereinander und den Lichtwellenleitern 1 und der Hülle 2 können mit einem eine Längswasserwanderung verhindernden Material, wie z. B. Petroleumjelly gefüllt sein.

Die Lichtwellenleiter 1 sind innerhalb der Hülle 2 auf engstem Raum angeordnet.

Gemäß der Lehre der Erfindung besteht die Hülle 2 aus einem aufgeschäumten thermoplastischen Kunststoff, wie z. B. Polyethylen oder Polypropylen. Hierdurch wird zum einen eine Ersparnis an Kunststoffmaterial erreicht, zum anderen wird eine Übertragung von radialen Kräften auf die Lichtwellenleiter 1 weitestgehend verhindert, da die Lichtwellenleiter 1 in dem relativ weichen Schaumstoff bei einer radialen Krafteinwirkung eingebettet werden.

Mit besonderem Vorteil besteht die Hülle 2 aus zwei Schichten 2a und 2b, wobei die innere Schicht 2a aus aufgeschäumtem Kunststoff und die äußere Schicht 2b aus ungeschäumtem Kunststoff besteht. Die äußere Schicht 2b dient dabei als mechanische Schutzschicht für die innere empfindlichere Schicht 2a.

Die innere Schicht 2a kann z. B. durch ein Band aus aufgeschäumtem Kunststoff durch Längsumhüllen oder durch Wickeln aufgebracht werden. Auf diese innere Schicht 2a kann dann die äußere Schicht 2b durch Extrusion aufgebracht werden.

Wesentlich günstiger ist es jedoch, beide Schichten 2a und 2b gleichzeitig durch Koextrusion herzustellen.

## Patentansprüche

1. Optische Ader mit einer Vielzahl von Lichtwellenleitern, die in einer Hülle aus thermoplastischem Kunststoff angeordnet sind, dadurch gekennzeichnet, daß die Lichtwellenleiter (1) parallel zueinander verlaufend oder mit großer Schlaglänge miteinander verseilt sind, und daß das Bündel aus Lichtwellenleitern (1) von einer Hülle (2) aus geschäumtem Kunststoff eng umfaßt ist.

2. Optische Ader nach Anspruch 1, dadurch gekennzeichnet, daß die Hülle (2) an ihrer inneren Oberfläche eine geschäumte Struktur (2a) und an ihrer äußeren Oberfläche eine ungeschäumte Struktur (2b) aufweist.

3. Optische Ader nach Anspruch 2, dadurch gekennzeichnet, daß die Hülle (2) koextrudiert ist.

4. Optische Ader nach einem der Ansprüche 1 bis 3, dadurch gekennzeichnet, daß die Hülle (2) aus geschäumtem Polyethylen mit einer äußeren Schicht (2b) aus ungeschäumtem Polyethylen besteht.

5. Optische Ader nach einem der Ansprüche 1 bis 3, dadurch gekennzeichnet, daß die Hülle (2) aus geschäumtem Polypropylen mit einer äußeren Schicht (2b) aus ungeschäumtem Polypropylen besteht.
